# FASCICULE DE BREVET EUROPEEN

(11) **EP 2 512 926 B1**
(45) Date de publication et mention de la délivrance du brevet: **06.04.2016**
(21) Numéro de dépôt: 10809003.6
(22) Date de dépôt: 14.12.2010
(51) Int. Cl.: B64D 15/04, B64D 33/02

(54) **ENTREE D'AIR D'UNE NACELLE D'AERONEF COMPRENANT UN TRAITEMENT DU GIVRE OPTIMISE**
LUFTEINLASS EINER FLUGZEUGGONDEL MIT OPTIMIIERTER ENTEISUNG
AICRAFT NACELLE AIR INLET WITH OPTIMISED DEICING TREATMENT

(30) Priorité: 18.12.2009 FR 0959183
(43) Date de publication de la demande: 24.10.2012
(73) Titulaire: Airbus Operations (S.A.S.), 31060 Toulouse (FR)
(72) Inventeur: HORMIERE, Arnaud, F-31100 Toulouse (FR); DEGA, Alain, F-31140 Montberon (FR); GAILLOT, Stéphane, F-31300 Toulouse (FR)
(74) Mandataire: Fantin, Laurent
(86) Numéro de dépôt international: PCT/FR2010/052702
(87) Numéro de publication internationale: WO 2011/073561

(56) Documents cités:
- EP-A2- 2 204 320
- FR-A1- 2 813 581
- US-A- 4 688 745
- US-B1- 6 267 328

## Description

La présente invention se rapporte à une entrée d'air d'une nacelle d'aéronef comprenant un traitement du givre optimisé.

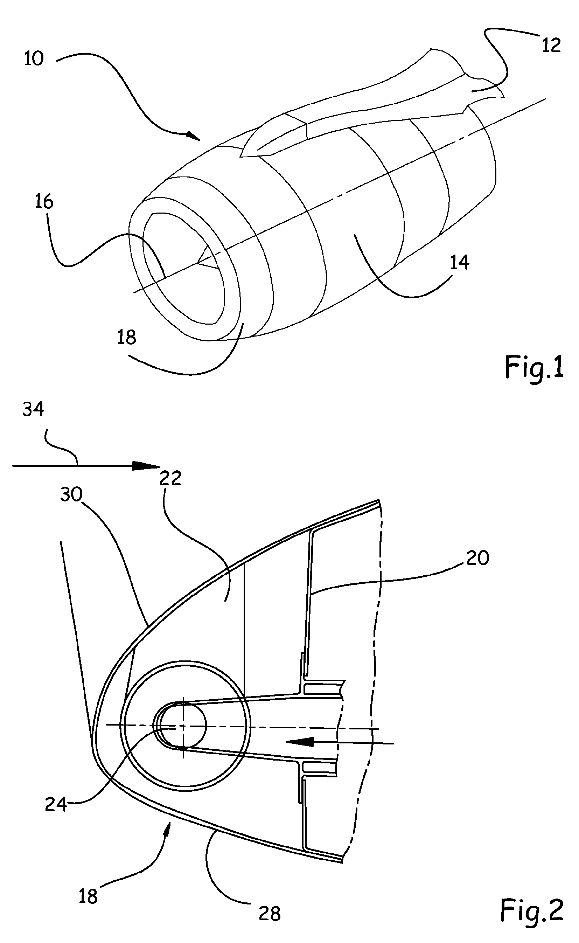

De manière connue, comme illustré sur la figure 1, un ensemble propulsif 10 d'un aéronef, par exemple relié sous la voilure par l'intermédiaire d'un mât 12, comprend une nacelle 14 dans laquelle est disposée de manière sensiblement concentrique une motorisation. L'axe longitudinal de la nacelle est référencé 16.

La nacelle 14 comprend une paroi intérieure délimitant un conduit avec une entrée d'air 18 à l'avant permettant de canaliser l'air en direction de la motorisation.

La présente invention se rapporte plus particulièrement à une nacelle intégrant un procédé de traitement du givre utilisant de l'air chaud en contact avec la paroi interne de l'entrée d'air 18, notamment de l'air chaud prélevé au niveau du moteur.

Les documents US-6.267.328 et US-4.688.745 montrent des nacelles avec des entrées d'air dégivrées.

Selon un mode de réalisation connu d'après les documents FR-2.813.581 et US-6.443.395, illustré sur les figures 2 et 3, une nacelle 14 comprend à l'intérieur une cloison appelée cadre avant 20 qui délimite avec l'entrée d'air 18 un conduit 22 qui s'étend sur toute la circonférence de la nacelle et qui a une section en forme sensiblement de D.

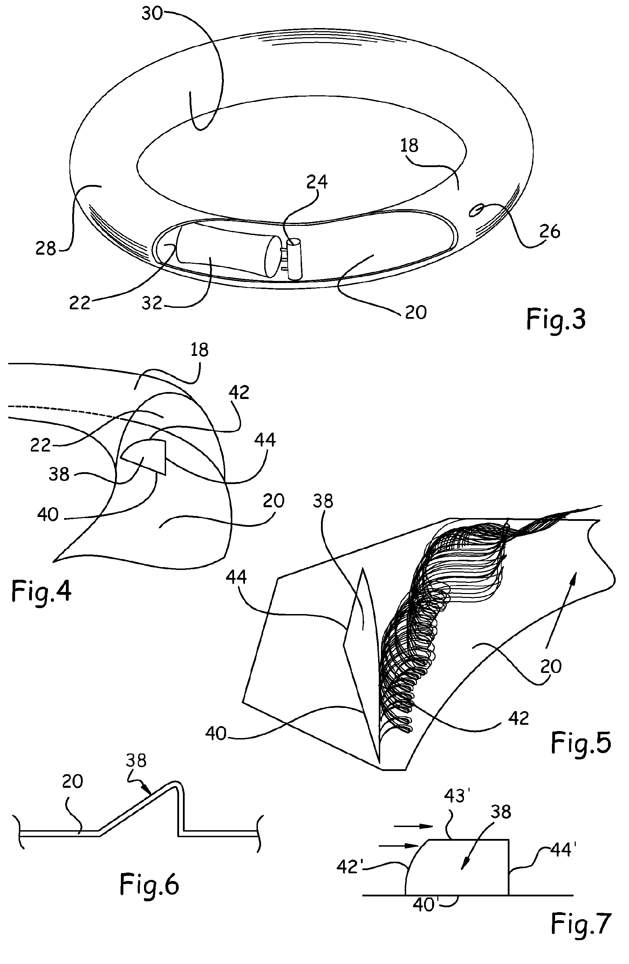

Ce conduit 22 est alimenté en air chaud par un système de buses ou un conduit d'alimentation 24 localisé, l'air circulant dans ce conduit étant évacué via un échappement 26 visible sur la figure 3.

L'air chaud injecté parcourt le conduit 22 sur 360°. De par un effet centrifuge, l'air chaud vient à circuler d'avantage sur le côté extérieur de l'entrée d'air référencé 28 sur la figure 2.

Si on dispose les moyens 24 d'injection de l'air chaud au point le plus bas de la nacelle, la capacité de dégivrage n'est pas homogène sur la circonférence. Elle augmente rapidement pour obtenir une valeur maximale puis diminue progressivement sur le reste de la circonférence avec une discontinuité du traitement du givre au niveau le plus bas.

En raison de l'effet centrifuge et/ou de l'aspect non homogène de la température sur la circonférence, la température au niveau du côté intérieur 30 de l'entrée d'air peut ne pas être suffisante.

Pour pallier à cette éventuelle insuffisance, on peut injecter un air plus chaud et/ou avec un débit plus important.

Toutefois, cette solution n'est pas satisfaisante car il est nécessaire de prévoir pour le cadre avant, l'entrée d'air et les éventuels revêtements de traitement acoustique des matériaux résistants à hautes températures. Cet aspect tend à réduire le choix des matériaux utilisables et impose généralement l'utilisation de matériaux lourds et relativement coûteux.

Pour limiter l'impact de cet air chaud injecté, les documents FR-2.813.581 et US-6.443.395 proposent de placer après les moyens 24 d'injection un mélangeur 32 qui mélange l'air chaud injecté avec l'air chaud déjà présent et circulant dans le conduit 22. Cette solution a pour avantage de réduire la valeur maximale de la température subie par la paroi du conduit 22.

Toutefois, ce mélangeur 32 ne permet pas d'homogénéiser la température de l'air chaud sur toute la circonférence. Ainsi, l'air chaud tend toujours à se plaquer contre le côté extérieur 28 de l'entrée d'air en raison de la force centrifuge. Aussi, la présente invention vise à pallier aux inconvénients de l'art antérieur en proposant une entrée d'air d'une nacelle d'aéronef comprenant des moyens pour optimiser le traitement du givre.

A cet effet, l'invention a pour objet une entrée d'air d'une nacelle d'aéronef comprenant un conduit s'étendant sur la circonférence de ladite entrée d'air et délimité à l'arrière par un cadre avant, des moyens d'injection en air chaud de manière localisée dans ledit conduit assurant la circulation de l'air chaud dans le conduit le long de la circonférence de la nacelle selon un sens, caractérisée en ce qu'elle comprend dans le conduit au moins un générateur de vortex sous forme d'une plaque ou d'une forme en saillie de la paroi du conduit pour perturber le flux d'air chaud afin de compenser l'effet de la force centrifuge et réduire le gradient de température entre le côté intérieur et le côté extérieur dudit conduit.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef,
- la figure 2 est une coupe selon un plan longitudinal de l'avant d'une nacelle,
- la figure 3 est une vue schématique en perspective d'un conduit d'une entrée d'air,
- la figure 4 est une vue schématique en perspective illustrant un générateur de vortex placé dans le conduit d'une entrée d'air selon un mode de réalisation,
- la figure 5 est un schéma illustrant un flux tourbillonnant créé par un générateur de vortex selon un mode de réalisation de l'invention,
- la figure 6 est un schéma illustrant un autre mode de réalisation d'un générateur de vortex selon l'invention,
- la figure 7 est une vue latérale d'une autre variante d'un générateur de vortex selon l'invention,
- la figure 8 est un schéma illustrant une entrée d'air,
- la figure 9 est un diagramme illustrant les courbes de températures sur la circonférence de l'entrée d'air au niveau du côté intérieur avec et sans générateur de vortex, et
- la figure 10 est un diagramme illustrant les courbes de températures sur la circonférence de l'entrée d'air au niveau du côté extérieur avec et sans générateur de vortex.

Sur la figure 2, on a représenté une entrée d'air 18 d'une nacelle d'aéronef. L'entrée d'air permet de canaliser vers la motorisation un flux d'air référencé par la flèche 34.

La partie frontale de l'entrée d'air 22 décrit une forme sensiblement circulaire qui s'étend dans un plan qui peut être sensiblement perpendiculaire à l'axe longitudinal, ou non perpendiculaire, avec la partie frontale située à 12h légèrement avancée. Toutefois, d'autres formes d'entrée d'air peuvent être envisagées.

L'invention se rapporte plus particulièrement à un traitement du givre consistant à utiliser de l'air chaud prélevé au niveau de la motorisation.

Selon un mode de réalisation, une nacelle comprend une cloison appelée cadre avant 20 qui délimite avec l'entrée d'air 18 un conduit 22 appelé conduit en D qui s'étend sur toute la circonférence de la nacelle et qui a une section en forme de D.

Selon un mode de réalisation, ce conduit en D 22 comprend des moyens 24 d'injection en air chaud de manière localisée.

En complément, le conduit en D 22 comprend un échappement 26, visible sur la figure 3.

Selon l'exemple illustré, les moyens 24 d'injection permettent de générer un flux dans le conduit 22 selon le sens horaire (comme illustré sur les figures) ou antihoraire.

Un mélangeur 32 peut être disposé à l'intérieur du conduit 22 juste après les moyens 24 d'injection en air chaud selon le sens d'écoulement du flux d'air chaud. Ce mélangeur permet de mélanger l'air chaud injecté avec l'air moins chaud déjà présent et circulant dans le conduit 22.

Le mélangeur ainsi que les moyens d'injection ne sont pas plus décrits car ils sont connus de l'homme du métier, notamment d'après les documents FR-2.813.581 et US-6.443.395.

De plus, l'invention n'est pas limitée à ce type de conduit, ni à ce type d'alimentation en air chaud.

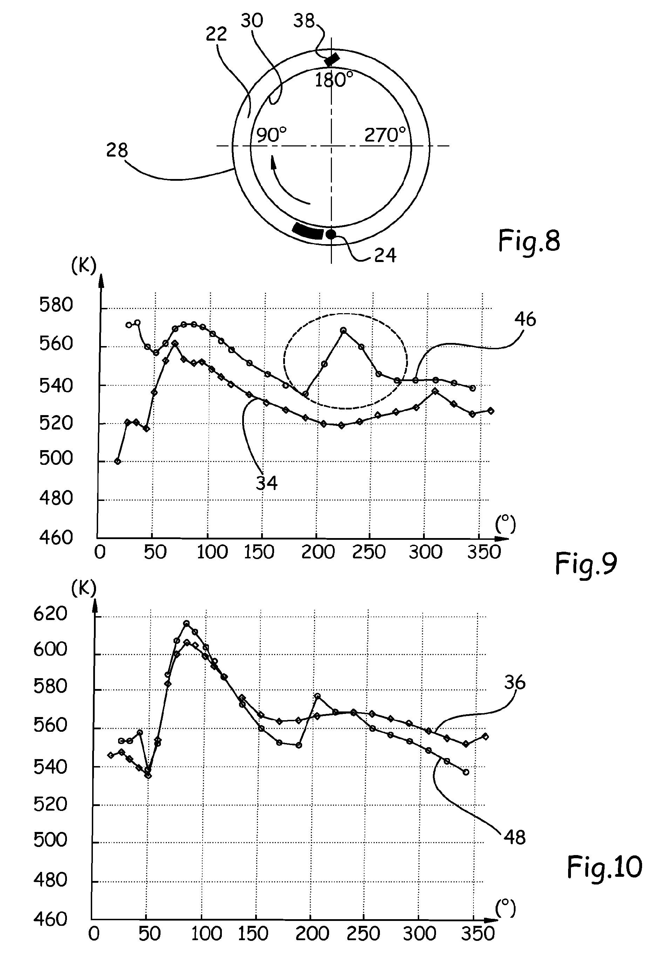

Selon cette configuration, on tend à obtenir un gradient de température entre le côté extérieur 28 et le côté intérieur 30, comme illustré par la courbe de températures 34 sur la figure 9 qui correspond à la température au niveau du côté intérieur 30 et la courbe de température 36 sur la figure 10 qui correspond à la température au niveau du côté extérieur 28. Ainsi, au niveau de la position correspondant à 220°, la température au niveau du côté intérieur est de l'ordre de 520° K et au niveau du côté extérieur de l'ordre de 570°K alors que les besoins en traitement du givre sont plus importants au niveau du côté intérieur que du côté extérieur.

Selon l'invention, l'entrée d'air comprend au moins un générateur de vortex 38 à l'intérieur du conduit 22 pour perturber le flux d'air chaud qui tend, sans générateur de vortex, à présenter des gradients de températures entre le côté intérieur et le côté extérieur. Un générateur de vortex est un élément de type mécanique et se présente sous forme d'une plaque ou d'une forme en saillie de la paroi du conduit (22) permettant de perturber le flux d'air chaud.

Grâce à la perturbation du flux d'air chaud, le générateur de vortex 38 tend à compenser l'effet de la force centrifuge et à réduire le gradient de température entre le côté intérieur et le côté extérieur.

De préférence, comme illustré sur les figures 4 et 5, le générateur de vortex 38 est fixé par des moyens de fixation appropriés au cadre avant 20 ou à une tôle formant l'entrée d'air 18.

En variante, comme illustré sur la figure 6, le générateur de vortex 38 peut ne pas être rapporté mais inclus dans le cadre avant 20 pour ne pas vibrer. Dans ce cas, le cadre avant 20 est déformé de manière à créer une forme en saillie dans le conduit dont le profil est adapté pour générer un générateur de vortex.

Selon un mode de réalisation illustré sur les figures 4 et 5, le générateur de vortex 38 comprend une plaque sensiblement plane, en saillie par rapport au cadre avant 20, de préférence perpendiculaire par rapport audit cadre avant 20. Cette plaque comprend un premier côté 40 orienté vers le cadre avant 20 et un deuxième côté 42 dont la distance qui le sépare avec le premier côté 40 augmente selon le sens d'écoulement du flux d'air chaud dans le conduit 22. La plaque est disposée dans un plan qui n'est ni parallèle, ni perpendiculaire avec la direction du flux d'air chaud s'écoulant dans le conduit 22.

Avantageusement, la plaque formant le générateur de vortex fait un angle de l'ordre de 20° à 60° par rapport à la direction du flux d'air s'écoulant dans le conduit 22.

Selon un mode de réalisation, la plaque est délimitée par trois côtés, un premier côté 40 rectiligne plaqué conte le cadre avant, un deuxième côté 42 en arc de cercle dont une première extrémité en amont selon le sens d'écoulement est reliée au premier côté et dont la seconde extrémité en aval est reliée à un troisième côté 44 relié au premier côté 40.

Comme illustré sur la figure 5, le générateur de vortex 38 crée à l'arrière de la plaque une dépression qui tend à décoller l'air très chaud plaqué contre le côté extérieur 28 vers le milieu du conduit 22 et à décoller l'air moins chaud plaqué contre le côté intérieur 30 vers le milieu du conduit 22.

Le fait que le deuxième côté 42 soit incliné par rapport au cadre avant permet de générer à l'arrière du générateur de vortex 38 un tourbillon qui favorise le brassage du flux d'air à l'intérieur du conduit, comme illustré sur la figure 5. Selon un autre mode de réalisation illustré sur la figure 7, la plaque formant le générateur de vortex est délimitée par quatre côtés, un premier côté 40' rectiligne plaqué conte le cadre avant, un deuxième côté 42' en arc de cercle dont une première extrémité en amont selon le sens d'écoulement est reliée au premier côté 40' et dont la seconde extrémité en aval est reliée à un troisième côté 43' sensiblement parallèle au premier côté 40' et un quatrième côté 44' reliant le premier côté 40' au troisième côté 43' sensiblement perpendiculaire au premier côté 40'.

Selon une autre caractéristique de l'invention, la plaque constituant le générateur de vortex forme un angle avec la direction du flux d'air chaud circulant à l'intérieur du conduit tel que l'extrémité amont du premier côté 40 est plus proche de l'axe de la nacelle que l'extrémité aval dudit premier côté. Cette configuration permet d'obtenir un rabattement du flux d'air vers l'intérieur de la nacelle à l'encontre de l'effet de la force centrifuge.

Toutes ces caractéristiques géométriques de la plaque peuvent s'appliquer à la forme en saillie du cadre avant 20 lorsque le générateur de vortex et le cadre avant sont réalisés d'un seul tenant. Dans ce cas, de préférence, la forme en saillie comprend une face qui peut avoir des formes géométriques sensiblement identiques à celles de la plaque.

Sur la figure 9, on a représenté une courbe 46 de températures au niveau du côté intérieur 30 de l'entrée d'air en présence d'un générateur de vortex 38 disposé à approximativement 180° des moyens 24 d'injection. On note une augmentation de la température après le générateur de vortex 38 par rapport à la configuration sans générateur de vortex.

Sur la figure 10, on a représenté une courbe 48 de températures au niveau du côté extérieur 28 de l'entrée d'air en présence d'un générateur de vortex. On note que la différence de température entre le côté extérieur et le côté intérieur est fortement réduite après le générateur de vortex. Ainsi, au niveau de la position correspondant à 220°, la température au niveau du côté intérieur est de l'ordre de 570° K et au niveau du côté extérieur de l'ordre de 570°K. Ainsi, le générateur de vortex 38 permet de compenser l'effet de la force centrifuge et d'augmenter sensiblement la capacité de traitement du givre au niveau du côté intérieur après lui. Ainsi, le générateur de vortex tend à optimiser le traitement du givre, la capacité de traitement du givre étant augmentée sans une augmentation de la température de l'air chaud injecté et/ou de son débit. Plusieurs générateurs de vortex 38 peuvent être disposés le long de la circonférence du conduit 22.

Selon un mode réalisation, la plaque formant le générateur de vortex est disposée sensiblement au milieu du conduit 22.

Selon un autre mode de réalisation, le générateur de vortex 38 peut être relié en au moins un point au cadre avant ou à une autre partie de l'entrée d'air de manière à ce qu'un flux d'air puisse circuler entre ledit générateur de vortex et la surface de l'entrée d'air ou du cadre avant à laquelle il est relié.

Selon un autre aspect de l'invention, le générateur de vortex est de conception simple et peu coûteux, ne nécessite pas d'entretien et a une masse nettement inférieure par rapport au mélangeur proposé par les documents FR-2.813.581 et US-6.443.395.

## Revendications

1. Entrée d'air d'une nacelle d'aéronef comprenant un conduit s'étendant sur la circonférence de ladite entrée d'air et délimité à l'arrière par un cadre avant (20), des moyens (24) d'injection en air chaud de manière localisée dans ledit conduit (22) assurant la circulation de l'air chaud dans le conduit le long de la circonférence de la nacelle selon un sens, **caractérisée en ce qu'**elle comprend dans le conduit (22) au moins un générateur de vortex (38), distinct des moyens (24) d'injection, sous forme d'une plaque ou d'une forme en saillie de la paroi du conduit (22) pour perturber le flux d'air chaud afin de compenser l'effet de la force centrifuge et réduire le gradient de température entre le côté intérieur et le côté extérieur dudit conduit (22).

2. Entrée d'air d'une nacelle d'aéronef selon la revendication 1, **caractérisée en ce que** le cadre avant (20) comprend une déformation en saillie dans le conduit (22) dont le profil est adapté pour générer un générateur de vortex (38).

3. Entrée d'air d'une nacelle d'aéronef selon la revendication 1, **caractérisée en ce qu'**un générateur de vortex (38) comprend une plaque sensiblement plane en saillie par rapport au cadre avant (20) et fixée audit cadre avant (20).

4. Entrée d'air d'une nacelle d'aéronef selon la revendication 2 ou 3, **caractérisée en ce que** le générateur de vortex comprend un premier côté (40) orienté vers le cadre avant (20) et un deuxième côté (42) dont la distance qui le sépare avec le premier côté (40) augmente selon le sens d'écoulement du flux d'air chaud dans le conduit (22).

5. Entrée d'air d'une nacelle d'aéronef selon la revendication 4, **caractérisée en ce que** le générateur de vortex est délimitée par trois côtés, un premier côté (40) rectiligne, un deuxième côté (42) en arc de cercle dont une première extrémité en amont selon le sens d'écoulement est reliée au premier côté et dont la seconde extrémité en aval est reliée à un troisième côté (44) relié au premier côté (40).

6. Entrée d'air d'une nacelle d'aéronef selon la revendication 4, **caractérisée en ce que** le générateur de vortex est délimitée par quatre côtés, un premier côté (40') rectiligne, un deuxième côté (42') en arc de cercle dont une première extrémité en amont selon le sens d'écoulement est reliée au premier côté (40') et dont la seconde extrémité en aval est reliée à un troisième côté (43') sensiblement parallèle au premier côté (40') et un quatrième côté (44') reliant le premier côté (40') au troisième côté (43') sensiblement perpendiculaire au premier côté (40').

7. Entrée d'air d'une nacelle d'aéronef selon l'une quelconque des revendications 3 à 6, **caractérisée en ce que** le générateur de vortex fait un angle de l'ordre de 20° à 60° par rapport à la direction du flux d'air s'écoulant dans le conduit (22).

8. Entrée d'air d'une nacelle d'aéronef selon l'une quelconque des revendications 4 à 7, **caractérisée en ce que** le générateur de vortex (38) forme un angle avec le flux d'air chaud circulant à l'intérieur du conduit tel que l'extrémité amont selon le sens d'écoulement du flux d'air du premier côté (40) est plus proche de l'axe de la nacelle que l'extrémité aval dudit premier côté (40).

9. Nacelle d'aéronef intégrant une entrée d'air selon l'une quelconque des revendications précédentes.

## Patentansprüche

1. Lufteinlass einer Gondel eines Luftfahrzeugs mit einem Kanal, der sich über den Umfang des Lufteinlasses erstreckt und nach hinten von einem vorderen Rahmen (20) begrenzt ist, mit Injektionsmitteln (24) für Warmluft, die derart in dem Kanal (22) angeordnet sind, dass die Zirkulation von Warmluft im Kanal entlang des Umfangs der Gondel in eine Richtung gewährleistet ist, **dadurch gekennzeichnet, dass** dieser im Kanal (22) wenigstens einen Verwirbler (38) aufweist, der sich von den Injektionsmitteln (24) unterscheidet und als Platte oder Vorsprung der Kanalwand ausgebildet ist, um den Fluss der Warmluft zu stören, um die Wirkung der Zentrifugalkraft zu kompensieren und den Temperaturgradienten zwischen der Innenseite und der Außenseite des Kanals (22) zu verringern.

2. Lufteinlass einer Gondel eines Luftfahrzeugs nach Anspruch 1, **dadurch gekennzeichnet, dass** der vordere Rahmen (20) eine in den Kanal (22) vorspringende Verformung aufweist, deren Profil dazu eingerichtet ist, einen Verwirbler (38) bereitzustellen.

3. Lufteinlass einer Gondel eines Luftfahrzeugs nach Anspruch 1, **dadurch gekennzeichnet, dass** ein Verwirbler (38) eine im Wesentlichen flache Platte aufweist, die bezüglich des vorderen Rahmens (20) vorspringt und an dem vorderen Rahmen (20) befestigt ist.

4. Lufteinlass einer Gondel eines Luftfahrzeugs nach Anspruch 2 oder 3, **dadurch gekennzeichnet, dass** der Verwirbler eine erste Seite (40) aufweist, die zum vorderen Rahmen (20) ausgerichtet ist, und eine zweite Seite (42), deren Entfernung, die diese von der ersten Seite (40) trennt, in Flussrichtung der Warmluft in dem Kanal (22) zunimmt.

5. Lufteinlass einer Gondel eines Luftfahrzeugs nach Anspruch 4, **dadurch gekennzeichnet, dass** der Verwirbler von drei Seiten begrenzt ist, einer ersten geradlinigen Seite (40), einer zweiten kreisbogenförmigen Seite (42), deren in Flussrichtung stromaufwärts gelegenes Ende mit der ersten Seite verbunden ist und deren stromabwärts gelegenes Ende mit einer dritten Seite (44) verbunden ist, die mit der ersten Seite (40) verbunden ist.

6. Lufteinlass einer Gondel eines Luftfahrzeugs nach Anspruch 4, **dadurch gekennzeichnet, dass** der Verwirbler von vier Seiten begrenzt ist, einer ersten geradlinigen Seite (40'), einer zweiten kreisbogenförmigen Seite (42'), deren in Strömungsrichtung stromaufwärts gelegenes erstes Ende mit der ersten Seite (40') verbunden ist und deren zweites stromabwärts gelegenes Ende mit einer dritten Seite (43') verbunden ist, die im Wesentlichen zur ersten Seite (40') parallel ist, und einer vierten Seite (44'), die die erste Seite (40') mit der dritten Seite (43') im Wesentlichen im rechten Winkel zur ersten Seite (40') verbindet.

7. Lufteinlass einer Gondel eines Luftfahrzeugs nach einem der Ansprüche 3 bis 6, **dadurch gekennzeichnet, dass** der Verwirbler einen Winkel in der Größenordnung von 20° bis 60° bezüglich der Flussrichtung der im Kanal (22) strömenden Luft einnimmt.

8. Lufteinlass einer Gondel eines Luftfahrzeugs nach einem der Ansprüche 4 bis 7, **dadurch gekennzeichnet, dass** der Verwirbler (38) einen Winkel mit der im Inneren des Kanals zirkulierenden Warmluft derart bildet, dass das in Strömungsrichtung des Warmluftstroms stromaufwärts gelegene Ende der ersten Seite (40) der Achse der Gondel näher liegt als das stromabwärts gelegene Ende der ersten Seite (40).

9. Gondel eines Luftfahrzeugs, die einen Lufteinlass nach einem der vorhergehenden Ansprüche umfasst.

## Claims

1. Air intake of an aircraft nacelle that comprises a pipe that extends over the circumference of said air intake and that is bordered to the rear by a front frame (20), with means (24) for localized injection of hot air in said pipe (22) providing the circulation of hot air in the pipe along the circumference of the nacelle in one direction, **characterized in that** it comprises - in the pipe (22) - at least one vortex generator (38), separate of means (24) for localized injection, in the shape of a plate or in a shape projecting from the wall of the pipe (22) to disrupt the flow of hot air so as to compensate for the action of centrifugal force and to reduce the temperature gradient between the inner side and the outer side of said pipe (22).

2. Air intake of an aircraft nacelle according to Claim 1, wherein the front frame (20) comprises a deformation that projects into the pipe (22) whose profile is adapted for generating a vortex generator (38).

3. Air intake of an aircraft nacelle according to Claim 1, wherein a vortex generator (38) comprises a plate that is essentially flat and that projects relative to the front frame (20) and is attached to said front frame (20).

4. Air intake of an aircraft nacelle according to Claim 2 or 3, wherein the vortex generator comprises a first side (40) that is oriented toward the front frame (20) and a second side (42) of which the distance that separates it with the first side (40) increases in the direction of flow of the hot air flow in the pipe (22).

5. Air intake of an aircraft nacelle according to Claim 4, wherein the vortex generator is bordered by three sides, a first rectilinear side (40), a second side (42) in the shape of an arc of which a first end that is upstream in the direction of flow is connected to the first side and of which the second end that is downstream is connected to a third side (44) that is connected to the first side (40).

6. Air intake of an aircraft nacelle according to Claim 4, wherein the vortex generator is bordered by four sides, a first rectilinear side (40'), a second side (42') in the shape of an arc of which a first end that is upstream in the direction of flow is connected to the first side (40') and of which the second end that is downstream is connected to a third side (43') that is essentially parallel to the first side (40'), and a fourth side (44') that connects the first side (40') to the third side (43') that is essentially perpendicular to the first side (40').

7. Air intake of an aircraft nacelle according to any of Claims 3 to 6, wherein the vortex generator forms an angle on the order of 20° to 60° relative to the direction of the air flow that flows into the pipe (22).

8. Air intake of an aircraft nacelle according to any of Claims 4 to 7, wherein the vortex generator (38) forms an angle with the hot air flow that circulates inside the pipe such that the end that is upstream in the direction of flow of the air flow of the first side (40) is closer to the axis of the nacelle than the end that is downstream from said first side (40).

9. Aircraft nacelle that integrates an air intake according to any of the preceding claims.
